# EUROPÄISCHE PATENTSCHRIFT

(11) **EP 2 812 788 B1**
(45) Veröffentlichungstag und Bekanntmachung des Hinweises auf die Patenterteilung: **03.10.2018**
(21) Anmeldenummer: 14715921.4
(22) Anmeldetag: 08.04.2014
(51) Int. Cl.: G06F 3/06, H04L 29/08

(54) **VERFAHREN ZUM LÖSCHEN VON INFORMATIONEN, VERWENDUNG EINES VERFAHRENS, COMPUTERPROGRAMMPRODUKT UND COMPUTERSYSTEM**
METHOD FOR DELETING INFORMATION, USE OF A METHOD, COMPUTER PROGRAM PRODUCT AND COMPUTER SYSTEM
PROCÉDÉ D'EFFACEMENT D'INFORMATIONS, UTILISATION D'UN PROCÉDÉ, PRODUIT-PROGRAMME D'ORDINATEUR ET SYSTÈME INFORMATIQUE

(30) Priorität: 22.04.2013 DE 102013104036
(43) Veröffentlichungstag der Anmeldung: 17.12.2014
(73) Patentinhaber: Fujitsu Technology Solutions Intellectual Property GmbH, 80807 München (DE)
(72) Erfinder: HÖHNKE, Thorsten, 86343 Königsbrunn (DE)
(74) Vertreter: Epping - Hermann - Fischer
(86) Internationale Anmeldenummer: PCT/EP2014/057047
(87) Internationale Veröffentlichungsnummer: WO 2014/173675

(56) Entgegenhaltungen:
- WO-A1-2008/135078
- US-A1- 2012 005 307
- ANONYMOUS: "Nuker for Windows PRODUCT DETAILS", INTERNET CITATION, 5. Juli 1999 (1999-07-05), XP002268895, Gefunden im Internet: URL:http://web.archive.org/web/20000916023 052/www.geniousa.com/nker_product_details. htm [gefunden am 2004-01-30]

## Beschreibung

Die Erfindung betrifft ein Verfahren zum Löschen von Informationen aus einem über ein Datennetzwerk zur Verfügung gestellten Speicher mit dynamischer Speicherortszuweisung, die Verwendung eines solchen Verfahrens, ein Computerprogrammprodukt und ein Computersystem.

Immer mehr Benutzer von Computersystemen greifen zum Sichern ihrer Daten auf Speicherdienste zurück, welche über das Internet mit dem Computersystem des Benutzers verbunden sind. Derartige Speicherdienste sind beispielsweise Cloudspeicher-Anbieter. Hierbei ist es üblich, dass ein Benutzer nicht weiß, wo seine Dateien gespeichert wurden. Üblicherweise werden die Daten der Benutzer beim einem Cloudspeicher-Dienst auf Servern gespeichert, welche weltweit verteilt sind. Auch ist es möglich, dass nicht alle Daten eines Benutzers auf einem Server, sondern an unterschiedlichen Orten auf verschiedenen Servern gespeichert sind. Somit ist es dem Benutzer nicht möglich, auf physikalischer Ebene seine gespeicherten Daten zu beeinflussen. Dies bietet unter anderem einen Sicherheitsvorteil gegenüber herkömmlichen Sicherungen, da auch unberechtigte Dritte nicht gezielt auf Datenträger mit den gespeicherten Daten zugreifen können.

Aus der US 2012/0005307 A1 ist eine Speichervirtualisierung bekannt. Hierin wird ein Verfahren beschrieben, das Zugriff auf eine Mehrzahl verschiedener Dateisysteme bereitstellt, die an einer Mehrzahl verschiedener Speicherorte implementiert sind, und das eine Anfrage für wenigstens einen Speicherort umfasst.

Aufgabe der Erfindung ist es, ein Verfahren zum Löschen von Informationen aus einem über ein Datennetzwerk zur Verfügung gestellten Speicher mit dynamischer Speicherortszuweisung zu beschreiben. Weiter ist es Aufgabe der Erfindung, die Verwendung eines derartigen Verfahrens sowie dafür geeignete Vorrichtungen zu beschreiben.

Gemäß einem ersten Aspekt der Erfindung wird ein Verfahren zum Löschen von Informationen aus einem über ein Datennetzwerk zur Verfügung gestellten Speicher mit dynamischer Speicherortszuweisung, insbesondere einem Cloudspeicher beschrieben. Das Verfahren umfasst die Schritte:
- Bestimmen von Größe und Name von in dem Speicher gespeicherten Dateien,
- Erstellen von Dateien mit einem vorbestimmten Inhalt und einer Größe und einem Namen entsprechend den bestimmten Größen und Namen der in dem Speicher gespeicherten Dateien,
- Überschreiben der gespeicherten Dateien in dem Speicher mit den entsprechenden, erstellten Dateien,
- Beschreiben des gesamten, restlichen zur Verfügung stehenden Speichers mit wenigstens einer Datei eines vorbestimmten Inhalts und
- Abwarten eines Zeitraums, der von einem Speicheranbieter zur Sicherung des Speichers vorbestimmt ist, nach Abschluss der Schritte des Überschreibens und Beschreibens.

Bei der Benutzung von Speichern mit dynamischer Speicherortszuweisung ist es einem Benutzer nicht bekannt, wo und wie seine Dateien gespeichert werden. Lädt der Benutzer eine Datei in den Speicher, beispielsweise einen Cloudspeicher, so wird diese Datei an irgendeinem Ort, beispielsweise einem Server des Cloudspeicher-Anbieters, abgelegt. Dem Benutzer wird zum Beispiel über eine Benutzeroberfläche die Datei angezeigt. Diese Anzeige umfasst lediglich einen Link beziehungsweise einen Verweis zu dem Speicherort der Datei. Der tatsächliche Speicherort der Datei wird dem Benutzer nicht angezeigt. Lädt der Benutzer weitere Dateien in den Cloudspeicher, beziehungsweise in den ihm zur Verfügung stehenden Speicherbereich eines Cloudspeichers, so werden diese weiteren Daten wiederum auf einem oder mehreren Servern des Speicheranbieters abgelegt. Dies ist allerdings in der Regel ein anderer Speicherort als der Speicherort der ersten Daten. Eine derartige Aufteilung der Daten bekommt der Benutzer nicht angezeigt. Löscht ein Benutzer in seiner Benutzeroberfläche die Verweise zu den Daten, so wird neuer Speicherplatz zur Verfügung gestellt. Die Verweise zu den gespeicherten Daten des Benutzers werden gelöscht. Die eigentlichen Daten, die auf dem Server gespeichert sind bleiben bestehen. Somit ist es für beispielsweise unberechtigte Dritte möglich, diese Daten aus dem Hardwarespeicher des Servers wieder herzustellen. Die Daten, die der Speicheranbieter speichert, werden in regelmäßigen Abständen kopiert, um eine Sicherung der Daten anzulegen. Auch auf die Informationen zum Speicherort und zur Speicherart dieser gesicherten Daten hat ein Benutzer keinen Einfluss.

Ein Vorteil des beschriebenen Verfahrens ist es, dass Daten derart gelöscht werden können, dass die Daten, welche der Benutzer gespeichert hat und die der Speicherdienstanbieter auf einem Server oder Speicherlaufwerk abgespeichert hat, endgültig gelöscht, beziehungsweise überschrieben werden, so dass es nicht möglich ist, die Daten zu rekonstruieren.

Gemäß einer vorteilhaften Ausgestaltung sind die Dateien zum Beschreiben des restlichen Speichers Dateien, deren Inhalt bitweise bestimmbar ist. Diese Dateien sind insbesondere containerlose Dateien.

Häufig haben Dateien die einer bestimmten Dateigruppe angehören, beziehungsweise ein bestimmtes Dateiformat haben, vorbestimmte Speicherinhalte. Derartige Dateien nennt man Containerdateien. Dadurch, dass containerlose Dateien verwendet werden, ist es möglich, jedes einzelne Bit dieser Datei und somit des beschriebenen Speicherbereichs zu bestimmen.

Gemäß einer vorteilhaften Ausgestaltung enthalten die vorbestimmten Inhalte der Dateien eine Folge logischer Einsen entsprechend der bestimmten Länge der Dateien. Ein Vorteil hiervon ist es, dass der der Datei zugeordnete Speicherbereich komplett mit logischen Einsen beschrieben wird. Hierdurch wird jegliche inhaltliche Information überschrieben.

Gemäß einer vorteilhaften Ausgestaltung umfasst das Bestimmen des Namens der Dateien im Schritt des Bestimmens das Bestimmen des Formats der Dateien. Des Weiteren weist im Schritt des Erstellens der Name entsprechend dem bestimmten Namen eine formatspezifische Dateikennung auf.

Ein Vorteil dieser Ausgestaltung ist es, dass durch die Benennung der Datei nach einem bestimmten Format das Format einer entsprechenden Datei simuliert wird. Soll die Datei beispielsweise aussehen wie eine .pdf-Datei, so wird eine Datei erstellt, deren Namen auf ".pdf" endet.

Gemäß einer vorteilhaften Ausgestaltung des Verfahrens umfassen die gespeicherten Dateien in den Schritten des Bestimmens, Erstellens und Überschreibens alle einem Benutzer zugeordneten gespeicherten Dateien. Vorteilhaft an einer derartigen Ausgestaltung ist es, dass alle Dateien überschrieben werden, die einem Benutzer zugeordnet werden können. Hierdurch gehen jegliche Dateien und Dateninformationen die dem Benutzer zugeordnet sind verloren. Dies hat für den Benutzer einen Sicherheitsvorteil.

Gemäß einem zweiten Aspekt der Erfindung wird die Verwendung eines entsprechenden Verfahrens beschrieben.

Gemäß einem dritten Aspekt der Erfindung wird ein Computerprogrammprodukt beschrieben, umfassend ausführbaren Programmcode, wobei der Programmcode dazu eingerichtet ist, bei Ausführung des Computerprogrammprodukts durch eine Datenverarbeitungsvorrichtung ein oben beschriebenes Verfahren durchzuführen.

Gemäß einem vierten Aspekt der Erfindung wird ein Computersystem beschrieben. Das Computersystem weist wenigstens einen Datennetzwerkanschluss auf, wobei das Computersystem dazu eingerichtet ist, über den Datennetzwerkanschluss eine Verbindung zu wenigstens einem über ein Datennetzwerk zur Verfügung gestellten Speicher mit dynamischer Speicherortszuweisung aufzubauen und das Computersystem des Weiteren dazu eingerichtet ist, ein oben beschriebenes Verfahren auszuführen.

Vorteile der Aspekte zwei, drei und vier entsprechen Vorteilen, welche zu Aspekt eins genannt wurden.

Die Erfindung wird nachfolgend anhand von Ausführungsbeispielen und Figuren näher beschrieben. Es zeigen:
Figur 1 ein Ablaufdiagramm eines Verfahrens gemäß einem Ausführungsbeispiel und
Figur 2 ein Computersystem gemäß einem Ausführungsbeispiel.

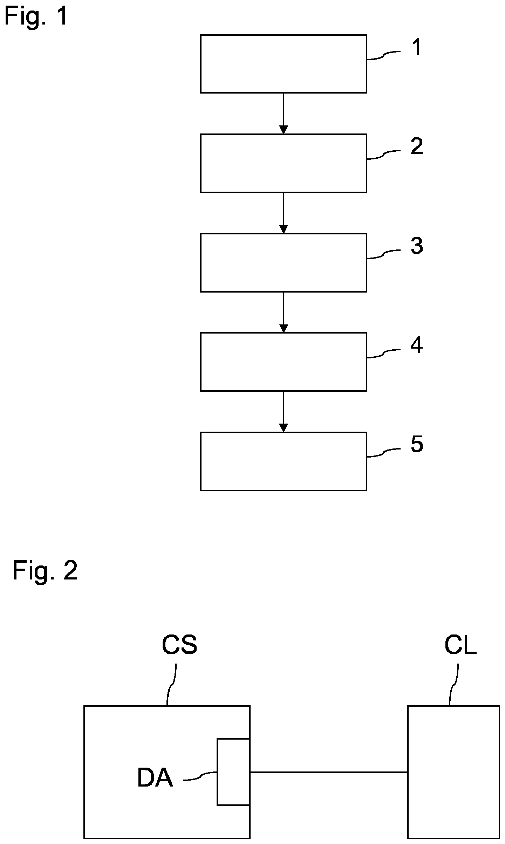

Figur 2 zeigt eine Anordnung mit einem Computersystem CS und einem Speicher CL mit dynamischer Speicherortszuweisung. Das Computersystem CS weist einen Datennetzwerkanschluss DA auf. Über den Datennetzwerkanschluss DA kann das Computersystem CS eine Verbindung zu einem Netzwerk aufbauen. Der Speicher CL ist ebenso wie das Computersystem CS an das Netzwerk angeschlossen. Hierdurch ist es dem Computersystem CS möglich, über den Datennetzanschluss DA eine Verbindung zu dem Speicher CL aufzubauen. Ein Benutzer des Computersystems CS kann somit Daten über das Netzwerk in den Speicher CL speichern. Das Computersystem CS ist hierbei zum Beispiel ein Heim-PC, ein Server einer Firma, ein Mobiltelefon oder ein so genannter Tablet-PC. Grundsätzlich kann als Computersystem CS jedes System angesehen werden, welches Daten über eine Netzwerkverbindung in einen Speicher speichern kann. Der Speicher CL ist im Ausführungsbeispiel ein Cloudspeicher. Der Anbieter des Speichers CL stellt dem Benutzer des Computersystems CS eine gewisse Menge Speicherplatz zur Verfügung. Dieser Speicherplatz wird dem Benutzer des Computersystems CS in der Regel über eine Benutzeroberfläche angezeigt. Diese Benutzeroberfläche zeigt dem Benutzer allerdings lediglich die Menge des Speichers an, der ihm zur Verfügung steht. Hierbei wird nicht angezeigt, wo dieser Speicher ist. Eine Zuordnung des zur Verfügung stehenden Speichers zu einem realen Speicher an einem bestimmten Ort erfolgt lediglich auf Seite des Speicheranbieters. Speichert ein Benutzer beispielsweise zwei Dateien in dem ihm zur Verfügung stehenden Speicher, so wird auf seiner Benutzeroberfläche angezeigt, dass zwei Dateien einen Speicher belegen und der zur Verfügung stehende Speicher wird, entsprechend der Größe der Dateien, verringert angezeigt. Auf Seite des Speicheranbieters werden die Dateien nicht unbedingt zusammen in einem physikalischen Speicher gespeichert, sondern jede Datei wird für sich auf verschiedenen physikalischen Speichern abgelegt. Diese Speicher sind in der Regel sehr viel größer als der Speicher, der einem einzelnen Benutzer zur Verfügung steht. Auf der Benutzeroberfläche des Benutzers des Computersystems CS wird nun vom Speicheranbieter eine Verknüpfung oder ein Link, beziehungsweise ein Verweis zu den eigentlichen Daten des Benutzers hergestellt. Somit kann der Benutzer des Computersystems CS jederzeit seine Daten abrufen. Nicht dargestellt werden dem Benutzer allerdings die tatsächlichen physikalischen Speicherorte der Dateien. Löscht der Benutzer nun die Dateien von der Benutzeroberfläche, so löscht er lediglich die Verknüpfungen, welche ihm auf der Benutzeroberfläche angezeigt werden. Auf Speicherdienstseite wird der Speicher, auf dem die Dateien physikalisch gespeichert sind als wieder zur Verfügung stehend markiert. Trotzdem stehen die Informationen der gespeicherten Daten auf physikalischer Ebene immer noch zur Verfügung. Somit ist es möglich, dass unbefugte Dritte diesen Speicher auslesen und so an die Informationen der gespeicherten Daten des Benutzers des Computersystems CS gelangen.

In Figur 1 ist ein Ablaufdiagramm dargestellt, anhand dessen ein Verfahren beschrieben wird, mit dem Daten endgültig aus einem Cloudspeicher gelöscht werden können.

In Schritt 1 werden Größe und Name von in dem Speicher CL gespeicherten Dateien bestimmt. Hierfür nutzt das Computersystem CS die Datennetzwerkverbindung, die über den Datennetzwerkanschluss DA besteht. Durch das Bestimmen der Größe der gespeicherten Dateien wird der belegte Speicherplatz der Dateien auf dem Speicher CL erfasst. Durch das Bestimmen der Namen der Dateien, welche von dem Benutzer auf dem Speicher CL gespeichert wurden, werden alle Dateien erfasst, welche der Benutzer des Computersystems CS auf dem Speicher CL gespeichert hat. Das Bestimmen des Namens umfasst in diesem Sinne das Bestimmen sowohl der von dem Benutzer vergebenen Bezeichnung, als auch das Bestimmen sämtlicher Dateiendungen oder -kennungen, welche vergeben werden, wenn eine Datei gespeichert wird. Dies umfasst zum Beispiel Formatsendungen wie ".pdf" oder ".doc".

In Schritt 2 werden Dateien erstellt, welche einen vorbestimmten Inhalt aufweisen. Die Dateien sind im Ausführungsbeispiel containerlose Dateien. Hierdurch ist es möglich, dass jedes einzelne Bit der Datei bestimmt werden kann. Als vorbestimmten Inhalt der Datei wird im Ausführungsbeispiel eine Folge logischer Einsen (0xFF) gewählt. Dadurch, dass die Dateien keine Containerdateien und somit bitweise bestimmbar sind, entspricht eine derartige Datei mit logischen Einsen einer Bitfolge logischer Einsen, welche keine inhaltlichen Informationen der ursprünglichen Datei enthält. Diese erstellten Dateien werden mit einer Größe erstellt, welche den bestimmten Größen der Dateien auf dem Speicher CL entsprechen. Dementsprechend werden auch die Namen inklusive Formatsendungen der Dateien an die gespeicherten Dateien angepasst.

Um die gespeicherten Daten auf dem Speicher CL zu löschen, werden die dort abgelegten Dateien mit den erstellten Dateien in Schritt 3 überschrieben. Wird innerhalb eines Cloudspeichers unter normalen Bedingungen eine Datei überschrieben, so wird eine neue Datei erstellt, die an einem unbestimmten physikalischen Speicherort gespeichert wird und die Zuweisung des Speicherplatzes der ursprünglichen Datei wird lediglich gelöscht. Die eigentlichen Informationen der gespeicherten ursprünglichen Datei bleiben jedoch erhalten. Da im Ausführungsbeispiel Dateien erstellt wurden, welche die exakt gleichen Größen und identische Namen der Dateien haben, welche auf dem Speicher CL gespeichert sind, werden diese an dem physikalischen Speicherort ersetzt. Somit kann sichergestellt werden, dass nicht nur eine Neuzuordnung des dem Benutzer zugeordneten Speicherbereichs auf den Cloudspeicher stattfindet, sondern dass tatsächlich an dem physikalischen Speicherort ein Überschreiben stattfindet.

Ist dieser Schritt ausgeführt, so bietet lediglich noch die Dateigröße einen Hinweis auf die ursprünglichen gespeicherten Daten. Um auch diese Information zu löschen, wird in Schritt 4 eine Datei oder mehrere Dateien erstellt, welche im Ausführungsbeispiel ebenso wie die erstellten Dateien mit logischen Einsen (0xFF) beschrieben ist. Diese Datei ist genau so groß, dass sie den gesamten restlichen, dem Benutzer des Computersystems CS zur Verfügung stehenden Speicher auffüllt. Alternativ kann Schritt 4 auch vor Schritt 3 ausgeführt werden. Nach Ausführen der beiden Schritte 3 und 4 ist der gesamte dem Benutzer zur Verfügung stehende Speicherbereich mit logischen Einsen gefüllt, und kann nicht mehr einzelnen Daten oder Dateien zugeordnet werden. Durch das Überschreiben der vorhandenen Dateien mit den exakt gleich großen Dateien, welche den gleichen Namen und die gleiche Formatsendung aufweisen ist sichergestellt, dass die gesicherten Daten aus dem Speicher CL gelöscht wurden.

In Schritt 5 wird nun solange gewartet, bis der Speicheranbieter des Cloudspeichers eine Sicherungskopie der Daten vornimmt. Somit wird auch die Sicherungskopie mit logischen Einsen überschrieben und es ist keine Information mehr vorhanden, welche auf die ursprünglichen Daten des Benutzers des Computersystems CS zurückzuführen ist.

Ein derartiges Verfahren kann von einer Software auf dem Computersystem CS ausgeführt werden, welche von einem beliebigen Hersteller sein und auf einer beliebigen Plattform laufen kann. Sie ermöglicht das Löschen von Daten in einem Speicher CL, beispielsweise einem Cloudspeicher, unabhängig vom Hersteller des Computersystems CS oder des Speichers CL und unabhängig von der Plattform die zum Betrieb des Computersystems CS oder des Speichers CL verwendet wird.

Während man bei herkömmlichen Datenträgern auf Memoryeffekte durch die Speicherung in einem verwendeten Medium Rücksicht nehmen muss, kann durch die technische Struktur in Datenzentren der Speicherdienstanbieter des Speichers CL auf eine Berücksichtigung von Memoryeffekten verzichtet werden. Dies betrifft genauso auch andere physikalische Untersuchungen, welche Rückstände auf Speichermedien aufspüren können.

### Bezugszeichenliste

- 1, 2, 3, 4, 5: Verfahrensschritte
- CS: Computersystem
- DA: Datennetzwerkanschluss
- CL: Speicher

## Patentansprüche

1. Verfahren zum Löschen von Informationen aus einem über ein Datennetzwerk zur Verfügung gestellten Speicher (CL) mit dynamischer Speicherortszuweisung, insbesondere einem Cloudspeicher, umfassend die Schritte:
- Bestimmen (1) von Größe und Name von in dem Speicher (CL) gespeicherten Dateien,
- Erstellen (2) von Dateien mit einem vorbestimmten Inhalt und einer Größe und einem Namen entsprechend den bestimmten Größen und Namen der in dem Speicher (CL) gespeicherten Dateien,
- Überschreiben (3) der gespeicherten Dateien in dem Speicher (CL) mit den entsprechenden, erstellten Dateien,
**gekennzeichnet durch**:
- Beschreiben (4) des gesamten, restlichen zur Verfügung stehenden Speichers mit wenigstens einer Datei eines vorbestimmten Inhalts und
- Abwarten (5) eines Zeitraums, der von einem Speicheranbieter zur Sicherung des Speichers (CL) vorbestimmt ist, nach Abschluss der Schritte des Überschreibens und Beschreibens.

2. Verfahren nach Anspruch 1, **dadurch gekennzeichnet, dass** die erstellten Dateien und die Dateien zum Beschreiben des restlichen Speichers Dateien sind, deren Inhalt bitweise bestimmbar ist, insbesondere containerlose Dateien.

3. Verfahren nach einem der Ansprüche 1 oder 2, **dadurch gekennzeichnet, dass** die vorbestimmten Inhalte der Dateien eine Folge logischer Einsen entsprechend der bestimmten Länge der Datei enthalten.

4. Verfahren nach einem der Ansprüche 1 bis 3, **dadurch gekennzeichnet, dass** im Schritt des Bestimmens das Bestimmen des Namens der Dateien das Bestimmen eines Formats der Dateien umfasst und im Schritt des Erstellens der Name entsprechend dem bestimmten Namen eine formatspezifische Dateikennung aufweist.

5. Verfahren nach einem der Ansprüche 1 bis 4, **dadurch gekennzeichnet, dass** in den Schritten des Bestimmens, Erstellens und Überschreibens die gespeicherten Dateien alle einem Benutzer zugeordneten gespeicherten Dateien umfassen.

6. Verwendung eines Verfahrens nach einem der Ansprüche 1 bis 5 zum Löschen von Informationen in einem Cloudspeicher.

7. Computerprogrammprodukt umfassend ausführbaren Programmcode, wobei der Programmcode dazu eingerichtet ist, bei Ausführung des Computerprogrammprodukts durch eine Datenverarbeitungsvorrichtung ein Verfahren gemäß einem der Ansprüche 1 bis 5 durchzuführen.

8. Computersystem aufweisend wenigstens einen Datennetzwerkanschluss (DA), wobei das Computersystem dazu eingerichtet ist, über den Datennetzwerkanschluss (DA) eine Verbindung zu wenigstens einem über ein Datennetzwerk zur Verfügung gestellten Speicher (CL) mit dynamischer Speicherortszuweisung aufzubauen und das Computersystem des Weiteren dazu eingerichtet ist, ein Verfahren gemäß einem der Ansprüche 1 bis 5 auszuführen.

## Claims

1. Method for deleting information from a storage (CL) which is provided via a data network and has dynamic storage location allocation, in particular a cloud storage, comprising the steps of:
- determining (1) the size and name of files stored in the storage (CL),
- creating (2) files having a predetermined content and a size and a name corresponding to the determined sizes and names of the files stored in the storage (CL),
- overwriting (3) the files stored in the storage (CL) with the corresponding files which have been created,
**characterized by**:
- writing (4) at least one file having a predetermined content to the entire remaining available storage, and
- waiting (5) for a time period, which is predetermined by a storage provider for the purpose of backing up the storage (CL), after the overwriting and writing steps have been concluded.

2. Method according to Claim 1, **characterized in that** the files which have been created and the files for writing to the remaining storage are files, the content of which can be determined in a bit-by-bit manner, in particular containerless files.

3. Method according to either of Claims 1 and 2, **characterized in that** the predetermined contents of the files contain a sequence of logic ones corresponding to the determined length of the file.

4. Method according to one of Claims 1 to 3, **characterized in that**, in the determining step, the determination of the name of the files comprises determining a format of the files and, in the creating step, the name corresponding to the determined name has a format-specific file identifier.

5. Method according to one of Claims 1 to 4, **characterized in that**, in the determining, creating and overwriting steps, the stored files comprise all stored files assigned to a user.

6. Use of a method according to one of Claims 1 to 5 for deleting information in a cloud storage.

7. Computer program product comprising executable program code, wherein the program code is set up to carry out a method according to one of Claims 1 to 5 when the computer program product is being executed by a data processing apparatus.

8. Computer system having at least one data network connection (DA), wherein the computer system is configured to set up a connection via the data network connection (DA) to at least one storage (CL), which is provided via a data network and has dynamic storage location allocation, and the computer system is also configured to carry out a method according to one of Claims 1 to 5.

## Revendications

1. Procédé d'effacement d'informations d'une mémoire (CL) à allocation dynamique de position de stockage prévue sur un réseau de données, en particulier d'une mémoire en nuage, comprenant les étapes suivantes :
- la détermination (1) de la taille et du nom de fichiers stockés dans la mémoire (CL),
- la création (2) de fichiers ayant un contenu prédéterminé et une taille et un nom qui correspondent aux tailles et aux noms déterminés des fichiers stockés dans la mémoire (CL),
- l'écrasement (3) des fichiers stockés dans la mémoire (CL) par les fichiers créés correspondants,
**caractérisé par** :
- l'écriture (4) d'au moins un fichier ayant un contenu prédéterminé dans la totalité de la mémoire disponible restante ; et
- l'attente (5) de l'écoulement d'une période de temps, qui est prédéterminée par un fournisseur de mémoire, pour sauvegarder la mémoire (CL) après que les étapes d'écrasement et d'écriture se soient achevées.

2. Procédé selon la revendication 1, **caractérisé en ce que** les fichiers créés et les fichiers destinés à être écrits dans la mémoire restante sont des fichiers dont le contenu peut être déterminé bit par bit, en particulier des fichiers sans conteneur.

3. Procédé selon l'une des revendications 1 ou 2, **caractérisé en ce que** les contenus prédéterminés des fichiers contiennent une suite de uns logiques correspondant à la longueur déterminée du fichier.

4. Procédé selon l'une quelconque des revendications 1 à 3, **caractérisé en ce que**, lors de l'étape de détermination, la détermination du nom des fichiers comprend la détermination d'un format des fichiers et **en ce que**, lors de l'étape de création, le nom correspondant au nom déterminé comporte un identificateur de fichier spécifique du format.

5. Procédé selon l'une des revendications 1 à 4, **caractérisé en ce que**, lors des étapes de détermination, de création et d'écrasement, les fichiers stockés comprennent tous les fichiers stockés associés à un utilisateur.

6. Utilisation d'un procédé selon l'une des revendications 1 à 5 pour supprimer des informations contenues dans une mémoire en nuage.

7. Produit de programme d'ordinateur comprenant un code de programme exécutable, dans lequel le code de programme est conçu pour mettre en oeuvre un procédé selon l'une des revendications 1 à 5 lorsque le produit de programme d'ordinateur est exécuté par un dispositif de traitement de données.

8. Système informatique comportant au moins un accès à un réseau de données (DA), dans lequel le système informatique est conçu pour établir une connexion par l'intermédiaire de l'accès au réseau de données (DA) à au moins une mémoire (CL) à allocation dynamique de position de stockage prévue sur un réseau de données, et en ce que le système informatique est en outre conçu pour mettre en oeuvre un procédé selon l'une des revendications 1 à 5.
